# EUROPEAN PATENT SPECIFICATION

(11) **EP 2 769 885 B1**
(45) Date of publication and mention of the grant of the patent: **13.04.2016**
(21) Application number: 13156312.4
(22) Date of filing: 22.02.2013
(51) Int. Cl.: B60R 21/235, D03D 1/02, D03D 11/02

(54) **An air-bag**
Airbag
Airbag

(43) Date of publication of application: 27.08.2014
(73) Proprietor: Autoliv Development AB, 447 83 Vårgårda (SE)
(72) Inventor: Stow, David, 41678 Goteborg (SE); Hirsch, Brita, Macclesfield, SK11 8AH (GB); Kroll, Jack, S447-32 Vargarda (SE)
(74) Representative: Beattie, Alex Thomas Stewart

(56) References cited:
- EP-A1- 2 407 353
- DE-A1-102011 017 207
- US-A1- 2007 200 329

## Description

### Description of Invention

THIS INVENTION relates to an air-bag, and in particular concerns an air-bag having an internal inflatable region which is sub-divided by an internal seam to form separate chambers.

One piece woven (OPW) air-bag cushions have become increasingly popular in recent years. To form a typical OPW cushion, two layers of fabric are selectively interwoven in some regions to form non-inflatable areas, but are not woven together in other regions to form inflatable chambers and passageways. OPW cushions are found to be advantageous as they may be formed rapidly and simply in a single operation on a weaving loom.

In order to allow a vehicle air-bag formed from an OPW cushion to be used effectively, the cushion must be able to withstand the pressures encountered as the cushion is inflated, and also when the cushion is involved in an impact (e.g. in the case of a side air-bag, the forces arising if a passenger is thrown against the air-bag during an impact). At the same time, it is desirable to reduce the cost and/or weight of the air-bag cushion wherever possible.

US 2007/200329 discloses an air bag having separable fabric layers that are locally integrally woven together using warp threads and weft threads. One or more integrally woven tethers extend between the fabric layers at selected locations. Each tether is formed of a plurality of threads. The threads can be either additional threads, different from the warp or weft threads, additional warp threads, additional weft threads or any combination thereof.

It is an object of the present invention to seek to address at least some of the above problems.

Accordingly, one aspect of the present invention provides an inflatable cushion for a vehicle air-bag system, comprising upper and lower layers of fabric woven from first yarns, comprising: a first connection, at which the upper and lower layers are joined to one another by yarns of the upper and/or lower layers of fabric; an inflatable chamber comprising a region over which the upper and lower layers of fabric are not connected to one another to form an internal cavity into which compressed gas may be introduced to inflate the cavity; and a second connection at which the upper and lower layers of fabric are joined to one another at least partially by one or more additional yarns which connect the upper and lower layers of fabric to one another, the additional yarns not comprising the yarns from which the upper and lower layers are woven.

Advantageously, the additional yarns have a greater specific strength than the yarns from which the upper and lower layers are formed.

Preferably, the additional yarns have a lower specific strength than the yarns from which the upper and lower layers are formed.

Conveniently, the additional yarns have a specific strength that is approximately equal to that of the yarns from which the upper and lower layers are formed.

Advantageously, the additional yarns form one or more stitches or tethers which connect the upper and lower layers of fabric to one another at the second connection.

Preferably, in the region of the second connection, a length of additional yarn extends between the upper and lower layers so that the upper and lower layers may be separated from one another in the region of the second connection.

Conveniently, the first connection comprises a peripheral region extending around at least a part of the periphery of the cushion.

Advantageously, the second connection comprises an internal division between two inflatable chambers within the inflatable cushion.

Preferably, the cushion is a one piece woven (OPW) cushion.

Conveniently, the density of additional yarns (in terms of yarns/unit length or area), in the region of the second connection, is less than the density of first yarns in the upper or lower fabric layers, and is preferably less than 90% of the density of first yarns in the upper or lower fabric layers.

Advantageously, the first connection is formed solely or primarily from yarns of the upper and/or lower layers of fabric.

Preferably, the connection between the upper and lower fabric layers at the second connection is formed solely from additional yarns, and does not comprise any yarns from which the upper and lower layers are woven.

Conveniently, the intrinsic strength of the additional yarns is at least 26% more than the intrinsic strength of the yarns from which the upper and lower layers of fabric are woven, and is preferably at least 66% more than the intrinsic strength of the yarns from which the upper and lower layers of fabric are woven.

Advantageously, the intrinsic strength of the additional yarns is between 26% and 300% more than the intrinsic strength of the yarns from which the upper and lower layers of fabric are woven.

Another aspect of the present invention provides a vehicle air-bag system comprising an inflatable cushion according to any preceding claim.

In order that the present invention may be more readily understood, embodiments thereof will now be described, by way of example, with reference to the accompanying drawings, in which:
Figure 1 is a schematic view of a conventional OPW air-bag cushion;
Figure 2 is a schematic view of a cushion according to the present invention; and
Figure 3 is a schematic view of an air-bag formed from the cushion of figure 2.

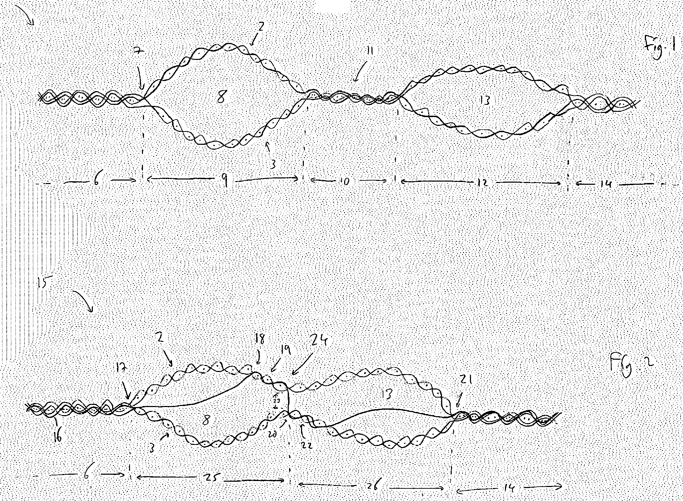

Turning firstly to figure 1, a schematic cross-sectional view is shown of a region of a conventional air-bag comprising an OPW cushion 1. As will be understood by those skilled in the art, the cushion 1 comprises two generally parallel fabric layers 2, 3, which are selectively interwoven with one another.

Each of the layers of fabric 2, 3 is formed from interwoven warp and weft fibres 4, 5 in a conventional fashion.

In a first region 6 of the cushion, the two layers of fabric 2, 3 are interwoven with one another to form a single composite layer. This first region 6 corresponds, in the finished air-bag, to a region outside the inflatable chambers of the air-bag.

At an external seam 7, the first and second layers of fabric 2, 3 separate from one another, so that they are spaced apart and define a first inflatable chamber 8 therebetween. The first inflatable chamber 8 extends over a second region 9 of the cushion, in which the first and second layers of fabric 2, 3 are not interwoven.

At a third region 10 of the cushion 1, the two layers of fabric 2, 3 are once again interwoven with one another. The third region corresponds to an internal seam 11 of the cushion 1.

In a fourth region 12 of the cushion 1, the first and second layers of fabric 2, 3 once again separate from one another, so that they are spaced apart and define a second inflatable chamber 13 therebetween.

Finally, at a fifth region of the cushion 1, the first and second layers 2, 3 are interwoven to form a further composite layer.

It should be understood that the cushion 1 may take a complex form, including several composite regions, external and internal seams, and inflatable chambers and passageways which may be interconnected with one another. The simple arrangement shown in figure 1 is for the purpose of illustration only.

Turning to figure 2, an air-bag cushion 15 embodying the present invention is shown. In common with the conventional cushion 1 described above, the cushion 15 includes selectively interwoven first and second layers 2, 3 of fabric.

Over a first region 6, the first and second layers 2, 3 are interwoven to form a composite layer. At a first external seam 17 the first and second layers 2, 3 separate from one another and are no longer interwoven. At a second external seam 21 the first and second layers of fabric 2, 3 again join together and are interwoven with one another to form a further composite layer 14.

An additional yarn 16, separate from the first and second layers 2, 3 is also included in the first region 6, interwoven with the first and second layers 2, 3.

At the first external seam 17, the additional yarn 16 ceases to be interwoven with the first and second layers of fabric 2, 3, and extends across the interior of the cushion 15.

The additional yarn 16 joins the first layer of fabric 2 at a point 18 that is spaced apart from the first external seam 17, and for a short distance 19 is interwoven with the first layer of fabric 2. The additional yarn 16 then extends across the interior of the cushion 15 to join the second layer of fabric 3 at a further point 20. For a short distance 22 the additional yarn 16 is interwoven with the second layer of fabric 3, and the additional yarn 16 then extends again across the interior of the cushion 15 to the second external seam 21, and is interwoven with the first and second layers of fabric 2, 3 in the further composite layer 14.

The additional yarn 16 is included in the cushion 15 so that the length of the additional yarn 16 that extends from the first layer of fabric 2 to the second layer of fabric 3 is of a relatively short length 23. This draws the upper and lower layers of fabric 2, 3 together, creating an internal seam or connection 24 in the cushion 15. As can be seen in figure 2, the region 25 between the first external seam 17 and the internal connection 24 forms a first inflatable chamber 8, and the region 26 between the internal connection 24 and the second external seam 21 forms a second inflatable chamber 13.

For the purposes of clarity only one additional yarn 16 is shown in figure 2. However, it should be understood that the connection that creates the internal connection 24 may be formed from a large number of yarns, which may be formed in any suitable pattern or configuration.

It should be understood that, while the additionally yarn 16 is woven into the composite layer 6 and the further composite layer 14, the additional yarn 16 is not required to be in these composite layers 6, 14 for any strengthening or other mechanical purposes. The additional yarn 16 is included in the composite layers 6, 14 because, due to the nature of the weaving process that is generally used to create an OPW air-bag cushion, the additional yarn 16 must extend across the entire width of the cushion. Thus, while the additional yarn 16 appears in the composite layers 6, 14, it remains distinct from the yarns from which the first and second layers of fabric 2, 3 are woven.

In preferred embodiments the additionally yarn 16 has different properties from the yarns used in the weaving of the first and second layers of fabric 2, 3. Preferably (although not essentially), the additional yarn 16 has a greater tensile strength than the yarns used in the weaving of the first and second layers of fabric 2, 3.

The use of a different type of yarn for the internal seam or connection 24 can give rise to advantages regarding air-bag integrity. In conventional OPW cushions in which internal seams or connections are formed through regions of interweaving of the upper and lower fabric layers, it is often found that these internal seams are the first part of the air-bag to fail under high internal pressures.

It has been found that, in order to form the internal seams to have sufficient strength to withstand the internal pressures encountered during inflation and deployment, the strength of the yarn from which the air-bag is formed overall must be increased. Under a conventional construction in which the internal seams are formed from yarns of the upper and lower layers of fabric, increasing the strength of the yarns used to form the fabric is the only way of increasing the strength of the internal seams. However, this can often lead to "over engineering" of the other regions of the air-bag, for instance the inflatable chambers and the composite layers. The overall cost and/or weight of the air-bag is therefore unnecessarily high.

However, using a relatively small amount of a stronger yarn to form the internal connections allows the "failure pressure" of the internal seam to be increased to be approximately equal to that of the other parts of the cushion 1. This therefore allows the overall pressure at which the air-bag will fail to be raised without significantly increasing the cost or weight of the air-bag.

In one example, the base fabric from which the upper and lower layers of fabric 2, 3 are formed may have a tensile strength of no more than 2,300N/50mm, and more preferably no more than 2,200N/50mm. This is measured according to ISO 13934. Seam strength is measured according to ISO 13932-1 with the inclusion of the OPW seam equidistant from the two clamping jaws. Yarn strength is measured according to ASTM method D885.

In a convention OPW internal seam (formed from yarns of the upper and lower layers of fabric), the strength of the seam is approximately 40% - 50% of the strength of the base fabric. Failure of the seam is generally initiated by the first yarn to break, and in the above example each yarn will have an intrinsic strength of about 19 N and so about 7.6N at the seam. In embodiments of the invention, the additional yarn forming the internal seam would have strength which is at least 26% more than that of a conventional OPW seam (i.e. 24N in this example), and even more preferably 66% to 300% more than this (i.e. 31.5N - 57N in this example). The strength of the additional yarns may be even higher than this for certain applications.

In a conventional OPW internal seam or connection, all of the yarns in the base fabric in the region of the seam are involved in forming the seam. In embodiments of the present invention, however, the number of extra yarns per unit area that is used to form the internal seam is less than the total number of yarns of the base fabric that are present in the region of the seam. For instance, the number of extra yarns used to form the internal seam may be in the range of 1 to 18/cm, but may be up to 90% of the density of yarns that appear in the base fabric.

By way of example the following constructions are shown to be advantageous:
1. Base fabric: 470dtx PA6.6 with 22 warp threads/cm and 19 weft threads/cm with extra yarns at a ratio of 1:4 using a 700dtx PA6.6 yarn.
2. Base fabric: 350dtx PA6.6 with 23.5 warp threads/cm and 23.5 weft threads/cm with extra yarns at a ratio of 1:2 using 470dtx PA6.6 yarn.

It is also possible for base fabric to be constructed from polyester (for example 470dtx or 550dtx) and the extra yarns made from polymer materials such as, but not limited to, aramid, PA 6.10, PA6,

In alternative embodiments, for instance involving more extreme fabric constructions (eg fabrics made for 900 - 1800 dtx yarns) the strength of the additional yarn(s) may be lower than those from which the first and second layers of fabric are formed. For example, a cushion embodying the invention may have 900dtx body yarns and 470dtx additional yarns, with the additional yarns being approximately 50% weaker than the body yarns. If 1800dtx is used for the body yarns the additional yarns could have approximately 25% of the strength of the body yarns, but more preferably 37% of the strength of the body yarns.

In the example shown in figure 2, the internal connection 24 is formed so that a length of additional yarn 16 extends between the first and second layers 2, 3 of fabric, so these layers 2, 3 lie at a distance 23 from one another when the inflatable chambers 8, 14 on either side of the internal connection 24 are inflated. This is in contrast to conventional techniques (such as shown in figure 1) in which the layers of fabric 2, 3 are fully interwoven with one another at an internal seam 11 and therefore the effective distance between the layers of fabric 2, 3 at the seam 11 is zero.

Forming the internal connection 24 with lengths of additional yarn 16 that allow the layers of fabric 2, 3 to lie at a distance from one another means that the depth of the cushion 15, when inflated, will be greater than zero in the region of the internal connection 24. This has the advantage that when the air-bag formed from the cushion 15 is inflated, the air-bag has a more uniform depth, and also gives improved protection in the region of the connection 24. In addition to this, with a conventional zero-depth seam there is a tendency for the cushion to "hinge" about the internal connection or seam 11, and it will be understood that the possibility of this happening is reduced.

It will be understood that the depth (when inflated) of the cushion 15 in the region of the internal connection 24 may be controlled by varying the length 23 of the additional yarn 16 that extends between the first and second layers of fabric 2, 3 to form the internal connection 24. The skilled person will appreciate that this can readily be controlled during the weaving process. Control over the depth of a seam or connection in this way is not possible when forming the seam or connection in the conventional manner shown in figure 1.

A further advantage of introducing additional yarns to form an internal connection is that, in a some OPW internal connections, the yarns forming the seam are drawn from the yarns of the upper and lower layers of fabric. In the region of the seam, therefore, there is a reduction in the cover factor of the base fabric, due to the fact that the yarns involved in the connection are "missing" from the base fabric. This leads to localised areas of increased permeability, which may cause the air-bag to fail. It is noted that, in prior OPW cushions with conventional internal seams, it is often necessary to reduce the permeability of the cushion by using a relatively heavy and expensive film, instead of a more conventional silicone coating.

Using additional yarn 16 to form the internal connection 24, on the other hand, does not lead to any reduction in the cover factor of the first and second layers of fabric 2, 3, thus helping to maintain the integrity of the air-bag in the region of the internal connection 24.

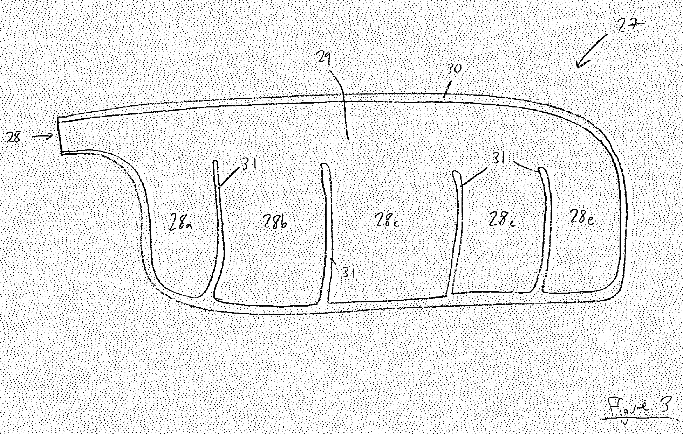

Figure 3 shows a schematic view of an inflatable curtain (IC)-type air-bag 27 formed using the technique discussed above. As will be understood by those skilled in the art an IC air-bag is generally provided to inflate between the internal side wall of a vehicle and a vehicle occupant, to protect the occupant in the event of a side impact or roll-over event. The air-bag 27 has a nozzle 28, into which compressed gas can be introduced to inflate the air-bag 27. The air-bag 27 is generally elongate in shape, having a series of inflatable chambers 28a to 28e, with a gas distribution passageway 29 running along an edge of the air-bag 27.

In this example, an external seam 30 runs around the outside edge of the air-bag 27, and this is formed through interweaving of the upper and lower fabric layers to form a composite layer, as is the case in the first region 6 of the cushion 15 shown in figure 2.

However, internal seams 31 are formed between the inflatable chambers 28a to 28e, with these internal seams 31 being formed using connections created using additional yarn, as shown in the internal connection 24 of figure 2.

It will be understood that the present invention may be used to form many different types and designs of air-bag, however, and is not limited to the formation of IC-type air-bags.

It should also be understood that an air-bag formed according to the present invention may have several internal connections, some of which are formed by way of a connection between the yarns of the upper and lower fabric layers (i.e. conventional seams), and others of which are formed from additional yarns.

It should also be understood that an air-bag formed according to the invention may have several internal connections, some of which have a zero (or near-zero) depth, and others of which have a non-zero depth. If more than one connection having a non-zero depth is formed, the depths of the connections may be different from each other.

In preferred embodiments of the invention, the or each external seam (and also the composite regions) is formed from a connection which primarily involves yarns of the upper and lower fabric layers. Similarly, it is preferred that the or each internal connection is formed from a connection with involves only additional yarns, and not any yarns of the fabric layers (except, of course, to the extend that the additional yarns will need to be connected to the yarns of the fabric layers).

However, it is envisaged that in some embodiments an internal connection (or composite region) may be formed from some yarns which are yarns of one or both of the fabric layers, supplemented and reinforced by additional yarns.

It will be understood that the present invention provides a cost-effective manner of increasing the strength and reliability of an air-bag without significantly increasing the cost thereof.

When used in this specification and claims, the terms "comprises" and "comprising" and variations thereof mean that the specified features, steps or integers are included. The terms are not to be interpreted to exclude the presence of other features, steps or components.

## Claims

1. An inflatable cushion (15, 27) for a vehicle air-bag system, comprising upper and lower layers (2; 3) of fabric woven from first yarns, comprising:
a first and a second external connection (17; 21), at which the upper and lower layers (2; 3) are joined to one another by yarns of the upper and/or lower layers (2; 3) of fabric;
first and second inflatable chambers (8, 13; 28a-28e) comprising regions (25; 26) over which the upper and lower layers (2; 3) of fabric are not connected to one another to form internal cavities into which compressed gas may be introduced to inflate the cavities; and
at least one internal connection (24, 31), at which the upper and lower layers (2; 3) of fabric are joined to one another solely by one or more additional yarns (16), the one or more additional yarns drawing the upper and lower layers (2; 3) of the fabric together creating an internal connection, the connection not comprising any yarns from which the upper and lower layers (2; 3) are woven, the connection having zero or near-zero depth, the at least one internal connection (24, 31) defining an internal division between the first and second inflatable chambers (8, 13; 28a-28e).

2. An inflatable cushion (15, 27) according to claim 1, wherein the additional yarns (16) have a greater specific strength than the yarns from which the upper and lower layers (2; 3) are formed.

3. An inflatable cushion (15, 27) according to claim 1, wherein the additional yarns (16) have a lower specific strength than the yarns from which the upper and lower layers (2; 3) are formed.

4. An inflatable cushion (15, 27) according to claim 1, wherein the additional yarns (16) have a specific strength that is approximately equal to that of the yarns from which the upper and lower layers (2; 3) are formed.

5. An inflatable cushion (15, 27) according to claim 1 or 2 wherein the additional yarns (16) form one or more stitches or tethers which connect the upper and lower layers (2; 3) of fabric to one another at the internal connection (24).

6. An inflatable cushion (15, 27) according to any preceding claim wherein, in the region of the internal connection (24), a length of additional yarn (16) extends between the upper and lower layers (2; 3) so that the upper and lower layers (2; 3) may be separated from one another in the region of the internal connection (24).

7. An inflatable cushion (15, 27) according to any preceding claim, wherein the first connection (17) comprises a peripheral region extending around at least a part of the periphery of the cushion.

8. An inflatable cushion (15, 27) according to any preceding claim, wherein the cushion is a one piece woven (OPW) cushion.

9. An inflatable cushion (15, 27) according to any preceding claim, wherein the density of additional yarns (16) (in terms of yarns/unit length or area), in the region of the internal connection (24), is less than the density of first yarns in the upper or lower fabric layers (2; 3), and is preferably less than 90% of the density of first yarns in the upper or lower fabric layers (2; 3).

10. An inflatable cushion (15, 27) according to any preceding claim, wherein the first connection (17) is formed solely or primarily from yarns of the upper and/or lower layers of fabric (2; 3).

11. An inflatable cushion (15, 27) according to any preceding claim, wherein the intrinsic strength of the additional yarns (16) is at least 26% more than the intrinsic strength of the yarns from which the upper and lower layers (2; 3) of fabric are woven, and is preferably at least 66% more than the intrinsic strength of the yarns from which the upper and lower layers (2; 3) of fabric are woven.

12. An inflatable cushion (15, 27) according to claim 11, wherein the intrinsic strength of the additional yarns (16) is between 26% and 300% more than the intrinsic strength of the yarns from which the upper and lower layers (2; 3) of fabric are woven.

13. A vehicle air-bag system comprising an inflatable cushion (15, 27) according to any preceding claim.

## Patentansprüche

1. Aufblasbares Kissen (15,27) für ein Fahrzeugairbagsystem, umfassend obere und untere Schichten (2; 3) eines aus ersten Garnen gewebten Stoffes, umfassend:
eine erste und eine zweite externe Verbindung (17; 21), an der die oberen und unteren Schichten (2; 3) durch Garne der oberen und/oder der unteren Stoffschichten (2; 3) miteinander verbunden sind;
erste und zweite aufblasbare Kammern (8,13; 28a bis 28e) umfassend Regionen (25; 26) über welche die oberen und unteren Stoffschichten (2; 3) nicht miteinander verbunden sind, um innere Hohlräume zu bilden, in welche komprimiertes Gas eingeleitet werden kann, um die Hohlräume aufzublasen; und
wenigstens eine innere Verbindung (24,31), an der die oberen und unteren Stoffschichten (2; 3) ausschließlich über ein oder mehrere zusätzliche Garne (16) miteinander verbunden sind, wobei das eine oder die mehreren zusätzlichen Garn/e die oberen und unteren Stoffschichten (2; 3) zusammenzieht/zusammenziehen, wobei eine innere Verbindung gebildet wird, wobei die Verbindung nicht solche Garne umfasst, aus denen die oberen und unteren Schichten (2; 3) gewebt sind, wobei die Verbindung eine Tiefe "Null" oder "annähernd Null" aufweist, wobei die wenigstens eine innere Verbindung (24,31) eine innere Unterteilung zwischen den ersten und zweiten aufblasbaren Kammern (8,13; 28a bis 28e) definiert.

2. Aufblasbares Kissen (15,27) nach Anspruch 1, wobei die zusätzlichen Garne (16) eine größere spezifische Festigkeit aufweisen, als diejenigen Garne, aus denen die oberen und unteren Schichten (2; 3) gebildet sind.

3. Aufblasbares Kissen (15,27) nach Anspruch 1, wobei die zusätzlichen Garne (16) eine geringere spezifische Festigkeit aufweisen, als diejenigen Garne, aus denen die oberen und unteren Schichten (2; 3) gebildet sind.

4. Aufblasbares Kissen (15,27) nach Anspruch 1, wobei die zusätzlichen Garne (16) eine spezifische Festigkeit aufweisen, die ungefähr mit der Festigkeit der Garne übereinstimmt, aus denen die oberen und unteren Schichten (2; 3) gebildet sind.

5. Aufblasbares Kissen (15, 27) nach Anspruch 1 oder 2, wobei die zusätzlichen Garne (16) eine oder mehrere Masche/n oder Haltefäden bilden, welche die oberen und unteren Stoffschichten (2; 3) an der inneren Verbindung (24) miteinander verbinden.

6. Aufblasbares Kissen (15,27) nach einem der vorhergehenden Ansprüche, wobei sich in der Region der inneren Verbindung (24) eine Länge eines zusätzlichen Garns (16) zwischen den oberen und unteren Schichten (2; 3) erstreckt, so dass die oberen und unteren Schichten (2; 3) in der Region der inneren Verbindung (24) voneinander getrennt werden können.

7. Aufblasbares Kissen (15,27) nach einem der vorhergehenden Ansprüche, wobei die erste Verbindung (17) einen Randbereich umfasst, der sich wenigstens um einen Teils des Kissenrands erstreckt.

8. Aufblasbares Kissen (15,27) nach einem der vorhergehenden Ansprüche, wobei das Kissen aus einem Stück gewebt ist (OPW).

9. Aufblasbares Kissen (15,27) nach einem der vorhergehenden Ansprüche, bei dem die Dichte der zusätzlichen Garne (16) (in Form von Garnen/Längeneinheit oder Flächeneinheit) in der Region der inneren Verbindung (24) niedriger ist als die Dichte der ersten Garne in den oberen oder unteren Stoffschichten (2; 3) und vorzugsweise weniger als 90 % der Dichte der ersten Garne in den oberen oder unteren Stoffschichten (2; 3) beträgt.

10. Aufblasbares Kissen (15,27) nach einem der vorhergehenden Ansprüche, wobei die erste Verbindung (17) ausschließlich oder hauptsächlich aus Garnen der oberen und/oder unteren Stoffschichten (2; 3) gebildet ist.

11. Aufblasbares Kissen (15,27) nach einem der vorhergehenden Ansprüche, wobei die intrinsische Festigkeit der zusätzlichen Garne (16) um wenigstens 26 % größer ist als die intrinsische Festigkeit der Garne, aus denen die oberen und unteren Stoffschichten (2; 3) gewebt sind, und vorzugsweise um wenigstens 66 % größer ist als die intrinsische Festigkeit der Garne, aus denen die oberen und unteren Stoffschichten (2; 3) gewebt sind.

12. Aufblasbares Kissen (15,27) nach Anspruch 11, wobei die intrinsische Festigkeit der zusätzlichen Garne (16) um 26 % bis 300 % größer ist als die intrinsische Festigkeit der Garne, aus denen die oberen und unteren Stoffschichten (2; 3) gewebt sind.

13. Fahrzeugairbagsystem, umfassend ein aufblasbares Kissen (15,27) nach einem der vorhergehenden Ansprüche.

## Revendications

1. Coussin gonflable (15, 27) destiné à un système d'airbag pour véhicule, comprenant des couches de tissu supérieure et inférieure (2 ; 3) tissées à partir de premiers fils, comprenant :
une première et une seconde liaison externe (17 ; 21), au niveau desquelles les couches supérieure et inférieure (2 ; 3) sont jointes l'une à l'autre par des fils des couches de tissu supérieure et/ou inférieure (2 ; 3) ;
des première et seconde chambres gonflables (8, 13 ; 28a-28e) comprenant des zones (25 ; 26) dans lesquelles les couches de tissu supérieure et inférieure (2 ; 3) ne sont pas liées l'une à l'autre afin de former des cavités internes dans lesquelles du gaz comprimé peut être introduit afin de gonfler ces cavités ; et
au moins une liaison interne (24, 31) au niveau de laquelle les couches de tissu supérieure et inférieure (2 ; 3) sont jointes l'une à l'autre uniquement au moyen d'un ou plusieurs fils supplémentaires (16), les un ou plusieurs fils supplémentaires attirant les couches de tissu supérieure et inférieure (2 ; 3) l'une vers l'autre, créant ainsi une liaison interne ne comprenant aucun des fils à partir desquels les couches supérieure et inférieure (2 ; 3) sont tissées et présentant une profondeur nulle, voire quasi-nulle, l'au moins une liaison interne (24, 31) définissant une division interne entre les première et seconde chambres gonflables (8, 13 ; 28a-28e).

2. Coussin gonflable (15, 27) selon la revendication 1, dans lequel les fils supplémentaires (16) présentent une plus grande résistance spécifique que les fils composant les couches supérieure et inférieure (2 ; 3).

3. Coussin gonflable (15, 27) selon la revendication 1, dans lequel les fils supplémentaires présentent une moindre résistance spécifique que les fils composant les couches supérieure et inférieure (2 ; 3).

4. Coussin gonflable (15, 27) selon la revendication 1, dans lequel les fils supplémentaires (16) présentent une résistance spécifique correspondant à peu près à celle des fils composant les couches supérieure et inférieure (2 ; 3).

5. Coussin gonflable (15, 27) selon la revendication 1 ou 2, dans lequel les fils supplémentaires (16) forment un ou plusieurs points de liage ou attaches qui relient les couches de tissu supérieure et inférieure (2 ; 3) l'une à l'autre au niveau de la liaison interne (24).

6. Coussin gonflable (15, 27) selon l'une quelconque des revendications précédentes, dans lequel, à proximité de la liaison interne (24), une longueur de fil supplémentaire (16) s'étend entre les couches supérieure et inférieure (2 ; 3), permettant aux couches supérieure et inférieure (2 ; 3) d'être séparées l'une de l'autre à proximité de la liaison interne (24).

7. Coussin gonflable (15, 27) selon l'une quelconque des revendications précédentes, dans lequel la première liaison (17) comprend une zone périphérique entourant au moins une partie de la périphérie du coussin.

8. Coussin gonflable (15, 27) selon l'une quelconque des revendications précédentes, dans lequel le coussin est un coussin tissé d'une seule pièce (OPW ; one-piece woven).

9. Coussin gonflable (15, 27) selon l'une quelconque des revendications précédentes, dans lequel la densité des fils supplémentaires (16) (en termes de fils par unité de longueur ou de surface), à proximité de la liaison interne (24), est inférieure à la densité des premiers fils composant les couches de tissu supérieure ou inférieure (2 ; 3) et est de préférence inférieure à 90 % de la densité des premiers fils composant les couches de tissu supérieure ou inférieure (2 ; 3).

10. Coussin gonflable (15, 27) selon l'une quelconque des revendications précédentes, dans lequel la première liaison (17) est formée uniquement ou principalement de fils des couches de tissu supérieure et/ou inférieure (2 ; 3).

11. Coussin gonflable (15, 27) selon l'une quelconque des revendications précédentes, dans lequel la résistance intrinsèque des fils supplémentaires (16) est d'au moins 26 % supérieure à celle des fils à partir desquels les couches de tissu supérieure et inférieure (2 ; 3) sont tissées et, de préférence, d'au moins 66 % supérieure à celle des fils à partir desquels les couches de tissu supérieure et inférieure (2 ; 3) sont tissées.

12. Coussin gonflable (15, 27) selon la revendication 11, dans lequel la résistance intrinsèque des fils supplémentaires (16) est de 26 % à 300 % supérieure à la celle des fils à partir desquels les couches de tissu supérieure et inférieure (2 ; 3) sont tissées.

13. Système d'airbag pour véhicule comprenant un coussin gonflable (15, 27) selon l'une quelconque des revendications précédentes.
